Europäisches Patentamt

European Patent Office

Office européen des brevets

(11) Numéro de publication: **0 151 544 B1**

(12) **FASCICULE DE BREVET EUROPEEN**

(45) Date de publication de fascicule du brevet: **21.04.93** (51) Int. Cl.⁵: **G06F 15/72**

(21) Numéro de dépôt: **85400061.9**

(22) Date de dépôt: **15.01.85**

(54) **Procédé et dispositif pour la génération, sur une surface de visualisation à réseau maillé, d'une courbe lissée.**

(30) Priorité: **30.01.84 US 575166**

(43) Date de publication de la demande:
**14.08.85 Bulletin 85/33**

(45) Mention de la délivrance du brevet:
**21.04.93 Bulletin 93/16**

(84) Etats contractants désignés:
**CH DE FR GB LI NL**

(56) Documents cités:
**EP-A- 0 037 320**
**EP-A- 0 121 311**
**FR-A- 2 373 840**
**GB-A- 2 021 905**

(73) Titulaire: **SEXTANT AVIONIOUE**
**Immeuble le Galilée, Parc Tertiaire de Meu-**
**don, 5/7 rue Jeanne Braconnier**
**F-92366 Meudon la Forêt Cédex(FR)**

(72) Inventeur: **Pham, Duc Thuy**
**25 bis, Avenue du Bois de Verrières**
**F-92290 Chatenay Malabry(FR)**
Inventeur: **Vanypre, Dominique**
**62, rue Péri**
**F-91430 Igny(FR)**

(74) Mandataire: **de Saint-Palais, Arnaud Marie et**
**al**
**CABINET MOUTARD 35, Avenue Victor Hugo**
**F-78960 Voisins le Bretonneux (FR)**

Rank Xerox (UK) Business Services
(3.10/3.5x/3.0.1)

## Description

La présente invention concerne un procédé de lissage des courbes générées par un système de visualisation graphique de type à balayage de télévision en noir et blanc et en couleur.

D'une manière générale, on sait que la surface de visualisation d'un tel système peut se diviser en un ensemble de petits carrés fictifs appelés éléments d'image ou "pixels" repérés par les coordonnées de leur centre (X, Y). Habituellement, à une surface de visualisation donnée et à une taille de mémoire donnée correspond un nombre fini de positions de pixels sur l'écran.

Ces éléments sont répartis suivant une grille (réseau maillé) dont le pas est donné par la distance entre deux pixels.

Ainsi, la reproduction ou même la réalisation d'une image peut être obtenue en provoquant, par un balayage, l'éclairement d'un nombre correspondant de pixels affectés d'une luminance et, éventuellement, d'une chrominance déterminées.

Il s'avère que selon les modes de génération de courbes classiques, les courbes obtenues sont constituées par des suites de segments, horizontaux ou verticaux (selon la pente de la courbe) décalés les uns par rapport aux autres en formant des marches d'escalier.

Pour supprimer cet inconvénient, il convient donc d'effectuer un lissage de la courbe obtenue en procédant à une diminution locale du contraste entre le trait et le fond et en augmentant artificiellement la définition de l'image.

Il a déjà été proposé, pour résoudre ce problème, notamment par le brevet FR No 2 371 031, un procédé consistant à représenter chaque point de la courbe en réglant la luminosité relative d'une matrice d'éléments d'affichage voisins de la position requise pour ce point de la courbe, de manière que ce groupe d'éléments d'affichage crée une impression subjective de ce point de la courbe dans sa position voulue. Ce procédé fait plus particulièrement intervenir une mémoire qui mémorise toutes les contributions possibles de luminosité nécessaire pour chaque élément d'affichage et un circuit qui permet de définir, outre les positions réelles des points de la courbe, les contributions réelles à la luminosité de cet élément. Il s'avère donc que ce procédé est relativement complexe et nécessite, pour sa mise en oeuvre, un processeur relativement puissant et équipé de mémoires à grandes capacités.

En vue de résoudre ce problème, la Demanderesse a déjà mis au point un procédé qui se trouve décrit dans la demande de brevet FR No 80 06974 déposée le 28 Mars 1980 pour "Procédé de lissage des courbes générées par balayage de télévision" et qui comprend les étapes suivantes :

- la mise en mémoire préalable d'un nombre prédéterminé de motifs composés d'au moins deux pixels adjacents disposés sur une même ligne ou sur une même colonne, et représentant une portion élémentaire de courbe (cette portion élémentaire de courbe pouvant correspondre avec le barycentre du motif), ces motifs étant adressables en fonction de la position dans le motif de ladite portion élémentaire de courbe ;
- le calcul pas à pas de la courbe théorique à tracer ;
- la détermination, pour chacun des pas du réseau maillé, du pixel le plus proche de la courbe théorique à tracer ;
- la mesure, au moins approximative, de la distance e de ce pixel à ladite courbe théorique ;
- la détermination, en fonction de cette distance $\bar{e}$, du motif dont la portion de courbe élémentaire correspond sensiblement à celle de la courbe théorique à tracer ;
- l'allumage dudit motif sur la surface de visualisation.

Ce procédé fait donc intervenir un algorithme de tracé permettant de déterminer successivement les pixels les plus proches de la courbe théorique à tracer, et d'évaluer la distance e de ces pixels à la courbe, à partir d'un paramètre interne, à savoir la puissance d'un point considéré par rapport à la courbe.

L'invention est definie dans les revendications 1 et 4.

L'invention a plus particulièrement pour but un procédé du type de celui précédemment décrit, mais dans lequel la distance $\underline{e}$ est déterminée de façon complètement externe à l'algorithme, de manière à permettre notamment :

- de suivre la courbe théorique sur une maille n fois plus fine (par exemple quatre fois) que la maille de la surface d'affichage en fraction de pixel, et d'obtenir ainsi une courbe lissée à $\frac{1}{n}$ pixel (par exemple à $\frac{1}{4}$ pixel), et
- de simplifier considérablement la détermination de la distance e.

D'une façon générale, on sait qu'une courbe peut être caractérisée, sur le plan mathématique, par la connaissance de son équation F(x,y) = 0.

Equation pouvant se résoudre de façon incrémentale grâce à la formule bien connue :

$$F(x + dx, y + dy) = F(x,y) + \sum_{n=1}^{\infty} \frac{1}{n!} d^n F(x,y)$$

Ainsi, par exemple, dans le cas d'une courbe conique, la forme quadratique associée sera de la forme :

$$F(x,y) = Ax^2 + 2 Bxy + Cx^2 + Dx + Ey + K$$

Par ailleurs, on peut choisir les paramètres A, B, C, D, E, K de manière que :
- l'ensemble des points (x,y) tels que $F(x,y) > 0$ est extérieur à la courbe,
- l'ensemble des points (x,y) tels que $F(x,y) = 0$ est sur la courbe,
- l'ensemble des points (x,y) tels que $F(x,y) < 0$ est intérieur à la courbe.

L'invention propose d'utiliser ces caractéristiques en vue d'effectuer le tracé d'une courbe lissée en déterminant, par un processus incrémental, à partir des éléments de contact de ses extrémités, l'ensemble discret (xi,yi) des points suivant au mieux la courbe d'équation $F(x,y) = 0$ dans un réseau maillé à nombre de lignes et de colonnes fini, dont le pas est réduit à une fraction, par exemple $\frac{1}{4}$ du pas du réseau maillé de la surface de visualisation.

Pour parvenir à ce résultat, le procédé de lissage selon l'invention comprend alors les étapes selon la revendication 1.

En fait, pour déterminer les couleurs de lissage, on applique les mêmes relations sur les trois couleurs primaires par exemple le rouge, le vert et le bleu, et on procède à la synthèse additive de ces couleurs. Par ailleurs, on rappelle qu'une portion élémentaire de courbe est considérée de façon microscopique comme un rectangle. Ainsi, pour le calcul de la couleur d'un pixel proche de la courbe, on calcule l'effet produit par le rectangle sur un pixel. A cet effet, comme précédemment indiqué, on applique sur ce pixel un filtre de reconstruction et on calcule, par une convolution entre la courbe à tracer et le filtre, la contribution de la courbe sur ce pixel à travers le filtre, ce qui permet d'en déduire la valeur à attribuer au pixel pour régénérer l'effet produit par la courbe passant près de ce pixel.

De façon plus précise, si l'on appelle $C_f$ la couleur du fond et $C_t$ la couleur du trait, la couleur $C_p$ du pixel sera déterminée par l'équation :

$$C_p = C_f + K(d,h) (C_t - C_f)$$

dans laquelle la variable $K(d,h)$ est fonction du filtre de reconstitution de la distance $\underline{d}$ du pixel à la portion élémentaire de courbe et de l'épaisseur h de la courbe.

En réalité, cette variable $K(d,h)$ est le résultat de la convolution entre la portion élémentaire de courbe et le filtre de reconstruction.

La variable $k(d,h)$ est déterminée par une table fournis sant, pour chacun des pixels constituant un motif et pour une épaisseur de courbe donnée, la valeur de $K(d,h)$ en fonction de la valeur de $\underline{e}$ servant à déterminer ce motif.

Des modes de réalisation de l'invention seront décrits ci-après, à titre d'exemples non limitatifs, avec référence aux dessins annexés, dans lesquels :

La figure 1 est un diagramme représentant, à grande échelle, une portion de la surface de visualisation d'un dispositif de visualisation, ce diagramme permettant d'illustrer le principe du tracé avec lissage d'une courbe, selon l'invention ;

La figure 2 est un diagramme représentant, à plus grande échelle, la surface de visualisation, sur laquelle une courbe est tracée à l'aide de motifs verticaux et de motifs horizontaux ;

La figure 3 est un algorithme permettant de réaliser le tracé avec lissage d'une courbe conformément au susdit second mode d'exécution de l'invention ;

Les figures 4 à 8 sont des tables de vérité servant à déterminer les différents paramètres utilisés par l'algorithme représenté figure 3 ;

La figure 9 est un diagramme représentatif d'une portion de la surface de visualisation, ce diagramme permettant d'illustrer un mode de détermination de la couleur des pixels utilisés pour le tracé de la courbe ;

La figure 10 est un diagramme précisant la forme caractéristique du filtre ;

La figure 11 est une table de vérité permettant de déterminer le coefficient K(d,h) affecté à chaque pixel d'un motif en fonction de la valeur "e" ;

La figure 12 est un diagramme représentatif d'une portion de la surface de visualisation permettant d'illustrer un mode de détermination de la couleur des pixels utilisés aux extrémités de la courbe ;

Les figures 13, 14 et 15 sont des tables de vérité permettant de déterminer le coefficient K(d) affecté aux motifs situés aux extrémités de la courbe ;

La figure 16 est le schéma théorique de l'architecture matérielle du dispositif servant à la mise en oeuvre du procédé selon l'invention ;

La figure 17 est le schéma de la carte de lissage utilisée dans le dispositif représenté figure 15.

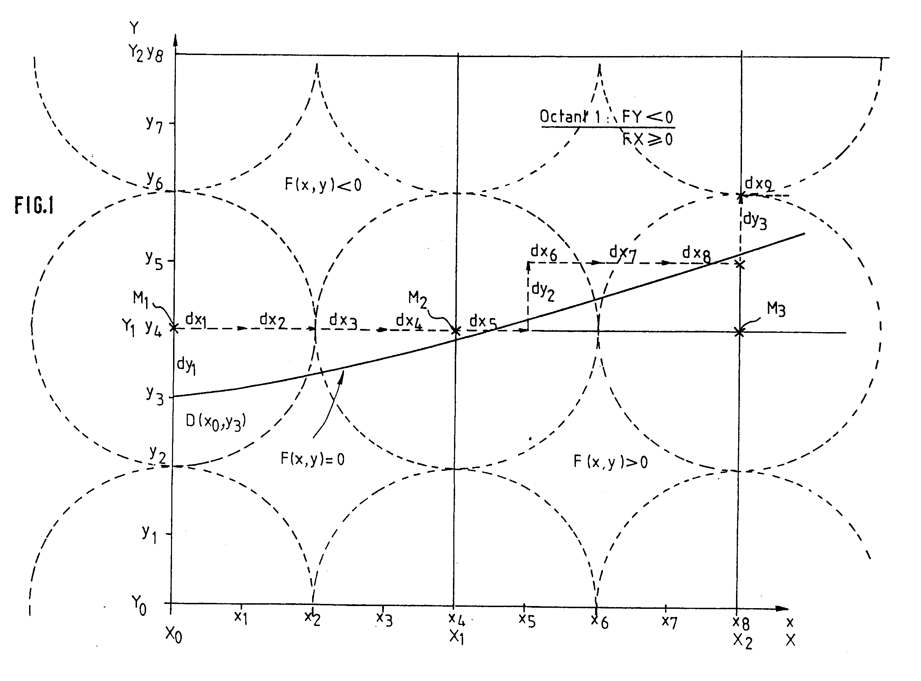

Comme précédemment mentionné, les figures 1 à 8 permettent d'illustrer le principe du tracé avec lissage d'une courbe selon un exemple d'exécution de l'invention.

Selon cet exemple, la courbe à tracer est un arc de conique dont on connaît la forme quadratique associée qui s'écrit :

$$F(x,y) = Ax^2 + 2 Bxy + Cy^2 + Dx + Ey + K$$

et dont on connaît les coordonnées des extrémités $x_0$, $y_0$ et $x_F$, $y_F$.

D'une façon plus précise, le but recherché par l'invention est de déterminer, par un processus incrémental, l'ensemble discret $(x_i, y_i)$ des points suivant au mieux la conique d'équation $F(x,y) = 0$ et ce, dans un réseau maillé dont le pas réduit est égal à une fraction (dans l'exemple représenté $\frac{1}{4}$) du pas du réseau maillé (grille) de la surface de visualisation. En d'autres termes, ceci signifie que l'incrément $(\Delta x, \Delta y)$ qui sera utilisé pour suivre la courbe sera égal à $\frac{1}{4}$ de pixel de la surface de visualisation.

Un tel tracé implique notamment la détermination de chaque incrément $+\Delta x$, $-\Delta x$, $+\Delta y$, $-\Delta y$ selon la pente de la courbe à ce point (détermination de l'octant) et la position du point $F(x_{n-1}, y_{n-1} \pm \Delta y)$ ou $F(x_{n-1} \pm \Delta x, y_{n-1})$ par rapport à la courbe.

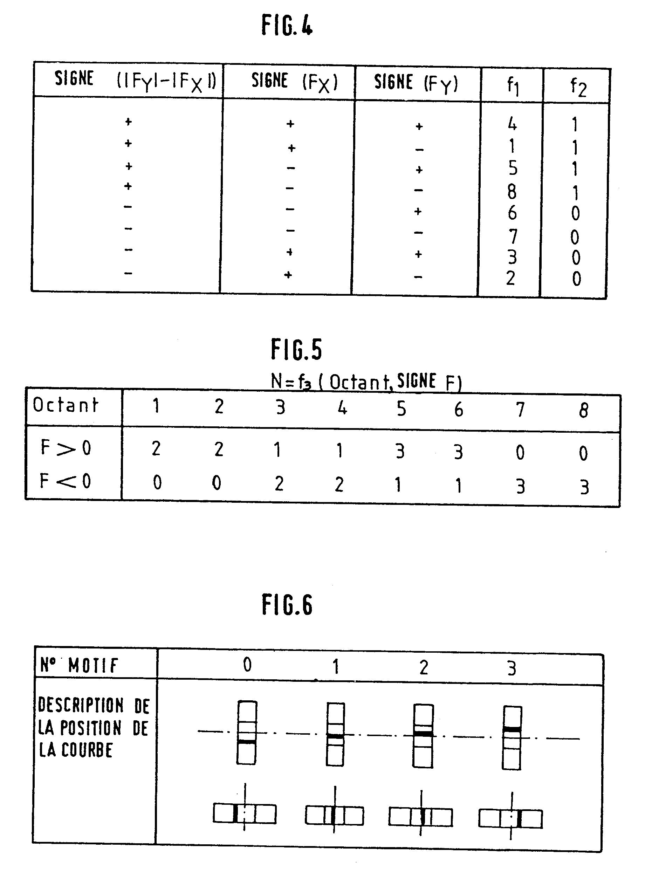

La détermination de l'octant est obtenue à partir du signe des dérivées premières $FX = \frac{1}{4} \frac{\delta F}{\delta x}$, $FY = \frac{1}{4} \frac{\delta F}{\delta y}$ et du signe de la différence entre la valeur absolue FX et la valeur absolue de FY. Cette détermination peut être effectuée au moyen d'un décodeur dont la table de vérité fournit la valeur de l'octant $f_1$(FX, FY) (figure 4) en fonction des signes de (FX), (FY) et de (|FX|-|FY|). Ce décodeur peut en outre fournir une indication $f_2$-(octant) permettant de savoir si le motif à utiliser doit être vertical ou horizontal.

La détermination de l'incrément $+\Delta x$, $-\Delta x$, $+\Delta y$, $-\Delta y$ à utiliser s'effectue en fonction de l'octant précédemment déterminé et du signe de la fonction F(x,y). En effet, le signe de la fonction F(x,y) va permettre de savoir si le point se trouve sur la courbe $F(x,y) = 0$, au-dessus de la courbe $F(x,y)>0$ ou au-dessous de la courbe $F(X,Y)<0$ (le calcul pouvant être, dans le cas d'une conique, implémenté grâce à un algorithme incrémental tel que celui de Danielson).

Cette détermination peut être effectuée au moyen d'un décodeur dont la table de vérité $N = f_3$ (octant, signe) est représentée sur la figure 5.

Selon cette table de vérité, pour $N = 0$, on appliquera un incrément $\Delta x = 0,25$, pour $N = 1$, on appliquera un incrément $-\Delta x = -0,25$, pour $N = 2$, on appliquera un incrément $\Delta y = 0,25$ et, pour $N = 3$, on appliquera un incrément $-\Delta y = -0,25$.

La détermination des pixels de la surface de visualisation les plus proches des points (xi, yi) précédemment déterminés dans le réseau maillé à pas réduit, peut s'obtenir d'une façon très simple : en effet, ces pixels seront déterminés chaque fois que les valeurs xi ou yi ont une valeur entière suivant l'octant.

Dans ce cas, la valeur e pourra être facilement obtenue par la partie fractionnaire de xi ou yi. A partir de cette valeur e, il sera ensuite possible de déterminer un motif lumineux, par exemple composé de trois pixels adjacents, dont la portion élémentaire de courbe qu'ils sont censés représenter est repérée par un axe central devant correspondre à des valeurs xi entier, ou yi entier. Il convient de noter que ces motifs sont déterminés à l'avance et peuvent être mis en mémoire, l'adressage de ces motifs pouvant être effectué conformément à la table de vérité représentée figure 6, à partir du numéro des motifs et de la description de la position de la courbe (choix d'un motif horizontal ou d'un motif vertical).

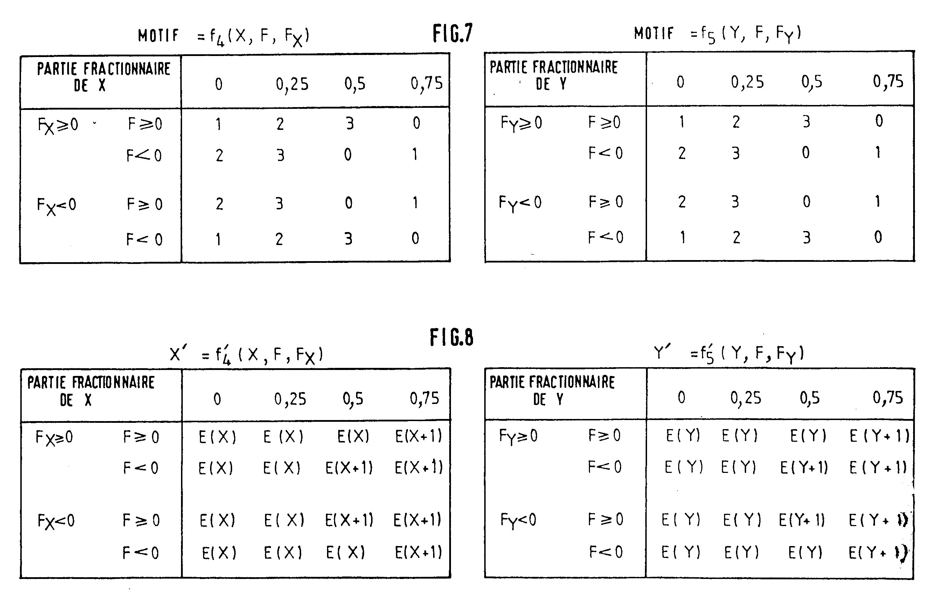

Le numéro du motif peut, quant à lui, être déterminé au moyen d'un décodeur dont les tables de vérité sont représentées sur la figure 7, en fonction de la partie fractionnaire de xi ou de yi, du signe de la fonction F(x,y) et du signe des dérivées premières FX, FY.

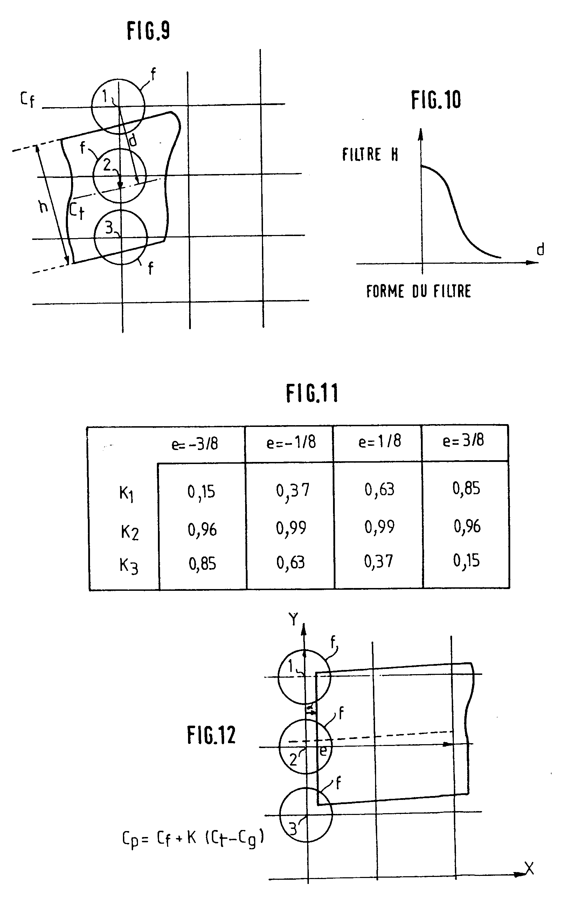

Le problème qui reste à résoudre est alors celui de la détermination de l'endroit où il convient d'appliquer le motif. En effet, selon la valeur de la partie fractionnaire de Xi ou de Yi, selon le signe des dérivées premières FX, FY et selon le signe de la fonction F, le motif devra se positionner sur le pixel de coordonnées (Xi, Yi), (Xi + 1, Yi) ou (Xi, Yi + 1). Cette détermination peut être obtenue au moyen d'un décodeur dont les tables de vérité sont représentées sur la figure 8.

L'étape suivante consiste alors en l'allumage du motif précédemment déterminé, à l'endroit précédemment défini.

Il convient de noter que le lissage aux extrémités de la courbe s'obtient en évaluant directement, à partir des coordonnées de début et de fin de la courbe, les coefficients $\alpha$ et e qui consistent respectivement en les distances suivant X et Y d'un point d'extrémité de la courbe aux coordonnées Xi Yi du pixel le plus proche et d'attribuer en fonction de ces deux distances des motifs présentant des numéros correspondants. Un tel processus ne présente pas de difficulté pour un homme de l'art et ne sera, par conséquent, pas décrit.

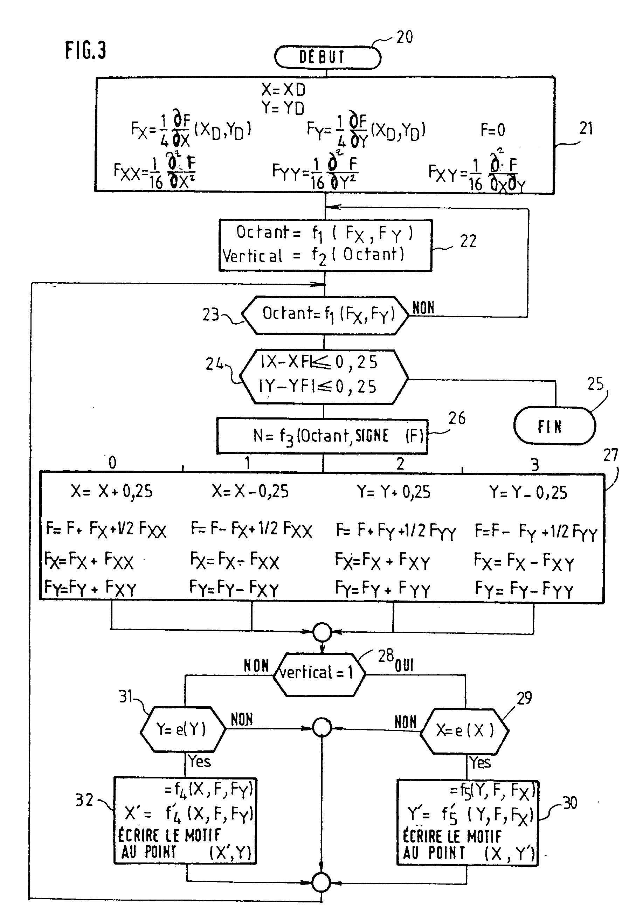

La figure 3 représente un algorithme permettant d'effectuer le tracé d'une courbe lissée selon le processus précédemment décrit.

A compter du début (bloc 20) l'algorithme comprend tout d'abord une phase d'initialisation (bloc 21) dans laquelle on effectue le calcul des dérivées premières et secondes exprimées en pixel multiplié par 4 de la fonction F(x,y) au point D (début de la courbe) de coordonnées XD et YD, ces dérivées étant les suivantes :

$$FX = \frac{\partial F(xD\ yD)}{\partial x} \times \frac{1}{4}$$

$$FY = \frac{\partial F(xD\ yD)}{\partial y} \times \frac{1}{4}$$

$$FXX = \frac{\partial^2 F(xD\ yD)}{\partial x^2} \times \frac{1}{16}$$

$$FYY = \frac{\partial^2 F(xD\ yD)}{\partial y^2} \times \frac{1}{16}$$

$$FXY = \frac{\partial^2 F(xD\ yD)}{\partial x \partial y} \times \frac{1}{16}$$

Le point de coordonnées XD, YD étant sur la courbe, la fonction F(x, y) est égale à zéro.

Dans une seconde phase (bloc 22), on détermine, grâce à la table de vérité représentée sur la figure 4, l'octant (octant = $f_1$ (FX, FY)) et la nature, verticale ou horizontale, du motif à appliquer (vertical = $f_2$ - (octant)).

Dans une troisième phase, le système vérifie que l'octant (octant = $f_1$ (FX, FY)) n'a pas changé à la suite d'une incrémentation (bloc 23). Si l'octant a changé, le système se reboucle en amont du bloc 22 dans le cas contraire, ou passe à la phase suivante.

Dans une quatrième phase, le système effectue un test de fin de course (bloc 24). Celle-ci sera détectée si la valeur absolue de la différence x-XF et la valeur absolue de la différence y-YF, sont inférieures ou égales à 0,25 (YF et XF étant les coordonnées du point final de la courbe). Si la fin de la courbe est détectée, le processus est terminé (bloc fin 25).

Dans le cas où la fin de la courbe n'est pas détectée, la phase suivante (la cinquième) consiste en la détermination de l'incrément, au moyen de la table de vérité représentée sur la figure 11 (bloc 26).

Le système calcule ensuite (bloc 27), suivant la valeur de l'incrément précédemment déterminée, les valeurs (sixième phase) :

$x = x + 0,25$
$F = F + Fx + \frac{1}{2} FXX$
$FX = FX + FXX$
$FY = FY + FXY$
$x = x - 0,25$
$F = F - FX + \frac{1}{2} FXX$
$FX = FX - FXX$

$$FY = FY - FXY$$
$$y = y + 0,25$$
$$F = F + FY + \tfrac{1}{2} FYY$$
$$FX = FX + FXY$$
$$FY = FY + FYY$$
$$y = y - 0,25$$
$$F = F - FY + \tfrac{1}{2} FYY$$
$$FX = FX - FXY$$
$$FY = FY - FYY$$

La septième étape est un branchement en fonction de la nature verticale ou non du motif à utiliser (bloc 28) :

a) si le motif à utiliser est vertical, l'étape suivante est la détection du passage de x par une valeur entière (bloc 29), si la valeur de x n'est pas une valeur entière le système se reboucle en amont du bloc (23) pour calculer un nouveau point ; par contre, si la valeur de x est une valeur entière, on passe à l'étape suivante (bloc 30) dans laquelle s'effectuent :

- la détermination du numéro du motif (motif = $f_5(y, F, Fx)$) à l'aide de la table de vérité représentée figure 7,
- la détermination de l'endroit où il faut appliquer le motif $Y' = f'_5(y, F, FX)$ à l'aide de la table de vérité représentée figure 8,
- l'allumage du motif au point X, Y' en utilisant la table de vérité représentée figure 6, une fois le motif allumé, le système se reboucle en amont du bloc 23 ;

b) si le motif à utiliser est horizontal, l'étape suivante est la détection du passage de y par une valeur entière (bloc 31), si la valeur de y n'est pas une valeur entière, le système se reboucle en amont du bloc 23 pour calculer un nouveau point. Par contre, si la valeur de y est une valeur entière, on passe à l'étape suivante (bloc 32) dans laquelle s'effectuent :

- la détermination du numéro du motif (motif = $f_4(x, F, FY)$) à l'aide de la table de vérité représentée figure 7,
- la détermination de l'endroit où il faut appliquer le motif $X' = f'_4(x, F, FY)$ à l'aide de la table de vérité représentée figure 8,
- l'allumage du motif au point X'Y en utilisant la table de vérité représentée figure 6.

D'une façon analogue, une fois le motif allumé, le système se reboucle en amont du bloc 23.

La figure 1 permet d'illustrer le principe du mode de tracé précédemment décrit.

Sur cette figure, on a représenté selon les coordonnées X, Y le réseau maillé (ou grille) de la surface d'affichage. Sur ce réseau, les pixels sont repérés par l'intersection des lignes $Y_0, Y_1...Y_n$ avec les colonnes $X_0, X_1...X_n$ (en traits pleins). Le réseau maillé à pas réduit est représenté par les lignes $y_0, y_1...y_n$ et les colonnes $x_0, x_1...x_n$ (entraits interrompus dans les intervalles des mailles de la surface d'affichage).

Sur ce réseau figure la courbe théorique $C = F(x,y)$ qu'il convient de tracer, qui présente une origine D et une fin F. Sur le réseau maillé à pas réduit les coordonnées de D sont $x_0$ et $y_3$.

Le processus de tracer de la courbe selon l'algorithme représenté figure 3 s'effectue comme suit :

Tout d'abord, l'algorithme effectue l'initialisation de X à la valeur $x_0$ et de Y à la valeur $y_3$. On se trouve donc sur le point D de la courbe, de sorte que F = 0. Le système va donc effectuer une incrémentation $dy_1$ qui détermine le point de coordonnées $(x_0, y_4)$. La courbe se trouvant dans le premier octant, les motifs à appliquer sont verticaux. Par ailleurs, au point $x_0, y_4$ X = 0, la valeur fractionnaire de Y est nulle, F est inférieur à 0 et la dérivée FY est inférieure à 0. Par conséquent le motif $M_1$ à appliquer, lu dans la table motif = $f_5(Y, F, FY)$ est le motif numéro 1.

Le point suivant, déterminé par le nouveau calcul de N, a pour coordonnées $(x_1, y_4)$ obtenu par une incrémentation $dx_1$. X n'étant pas entier, le système procède d'une façon analogue à des incrémentations $dx_2, dx_3$ puis $dx_4$, pour lesquelles l'algorithme ne trace pas de nouveaux motifs.

L'incrémentation $dx_4$ détermine le point de coordonnées $(x_4, y_4)$. Dans cette portion de courbe, les motifs à appliquer sont toujours verticaux, la dérivée FY est négative et X = $x_4$ est entier. L'algorithme détermine le numéro du motif au moyen de la table motif = $f_5(Y, F, FY)$ avec F < 0, partie fractionnaire de Y nulle et FY négatif. Le motif $M_2$ trouvé est donc le motif numéro 1.

Le processus se poursuit ensuite jusqu'à la détermination du point de coordonnées $(y_5, X_2)$ et ainsi de suite jusqu'à la fin de la courbe.

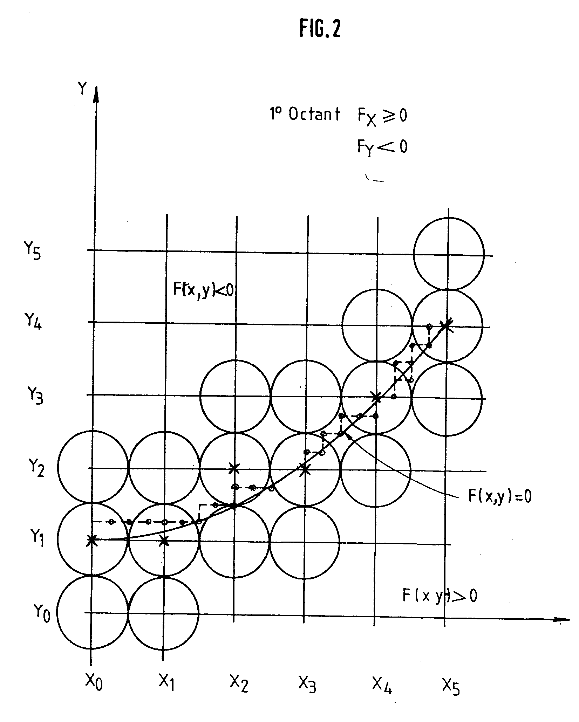

La figure 2 est une représentation à plus grande échelle permettant de représenter le tracé d'une courbe au moyen de motifs verticaux et horizontaux comprenant chacun trois pixels représentés par des cercles. Les noeuds marqués par des points correspondent à l'ensemble des points discrets (xi, yi) trouvés par l'algorithme dans le réseau maillé à pas réduit, et les noeuds marqués par des croix représentent l'ensemble discret des centres des pixels (Xi, Yi) de la surface de visualisation les plus proches des points (xi, yi) relevés et sur lesquels on applique un motif.

Le procédé de lissage conforme à l'exemple précédemment décrit, permet d'obtenir des courbes lissées à $\frac{1}{4}$ de pixel et fait intervenir quatre motifs différents pris horizontalement ou verticalement, symétriques deux à deux et correspondant à des portions élémentaires de courbes éloignées d'une distance de + ou - e du pixel de référence.

Bien entendu, l'espace colorimétrique utilisé est celui du module de visualisation. Ainsi, dans la suite de la description, on supposera que dans cet espace colorimétrique, les trois couleurs primaires sont le rouge, le vert et le bleu.

Par ailleurs, pour déterminer les couleurs de lissage, on appliquera sur les trois couleurs primaires les mêmes relations et on effectuera une synthèse additive en utilisant les propriétés linéaires de l'espace utilisé.

Il va de soi qu'un même raisonnement pourra être tenu sur d'autres espaces colorimétriques, même non linéaires.

Par ailleurs, comme précédemment mentionné, le lissage d'une image en couleur nécessite la définition de plusieurs couleurs intermédiaires entre la couleur du trait et celle du fond.

Il convient de noter à ce sujet que l'invention ne se limite pas à la solution précédemment décrite.

En partant du fait qu'un segment élémentaire de courbe est considéré de façon microscopique comme un rectangle, il est possible de calculer la couleur d'un pixel proche de la courbe en déterminant l'effet produit par ce rectangle sur ledit pixel.

A cet effet, on applique sur ce pixel un filtre de reconstruction f et on calcule la contribution de la courbe sur ce pixel à travers le filtre.

Dans l'exemple représenté sur les figures 9 à 15, le filtre de reconstruction f utilisé est un filtre Gaussien de révolution de largeur égale à 0,5 pixel dont la forme est représentée sur la figure 10 et dont la valeur H est fonction de la distance d du pixel à la portion de courbe.

Selon cette méthode, le calcul de la couleur $C_P$ d'un pixel proche de la courbe peut être réalisé au moyen de la formule :

$$C_P = Cf + K(d,h) (Ct - Cf)$$

dans laquelle :
Cf est la couleur de fond,
Ct est la couleur du trait, et
K(d,h) est une valeur qui est fonction de la forme du filtre de reconstruction et de la distance d du pixel à la transition fond-trait de la portion de courbe (K(d,h) $\epsilon$ [0,1]).

En réalité, la valeur K(d,h) est le résultat de la convolution entre la courbe et le filtre de reconstruction.

D'une façon pratique, dans le cas du calcul de la couleur des trois pixels composant un motif et, dans le cas où la courbe à tracer présente une épaisseur de deux pixels, le calcul de la valeur K(d) est obtenu au moyen d'un décodeur, fournissant pour chacun des pixels la valeur de k(d,h) en fonction de la valeur de "e". La table de vérité de ce décodeur est représentée sur la figure 11. Dans cette table e prend successivement les valeurs $-\frac{3}{8}$ , $-\frac{1}{8}$ , $\frac{1}{8}$ , $\frac{3}{8}$ . En pratique, les valeurs de K(d,h) (0,85 ; 0,96 ; 0,99) sont prises égales à 0,85 pour limiter le nombre des couleurs différentes nécessaires au lissage.

Le même principe est appliqué pour déterminer les motifs d'extrémité de la courbe. Dans ce cas également, l'extrémité de la courbe est assimilée à une portion de rectangle et la largeur du filtre utilisé limite à 1 motif avant ou après l'influence de l'extrémité de la courbe.

Dans ce cas, la formule permettant de déterminer la couleur des pixels composant un motif d'extrémité de la courbe sera de la forme :

$$C_P = Cf + K (Ct - Cf)$$

formule dans laquelle K est déterminé pour une épaisseur de courbe donnée en fonction des distances e et $\alpha$ entre le pixel et l'extrémité de la courbe selon les deux axes de coordonnées X et Y (figure 12) ($K_1$ étant la valeur K du pixel 1, $K_2$ étant la valeur K du pixel 2 et $K_3$ étant la valeur K du pixel 3).

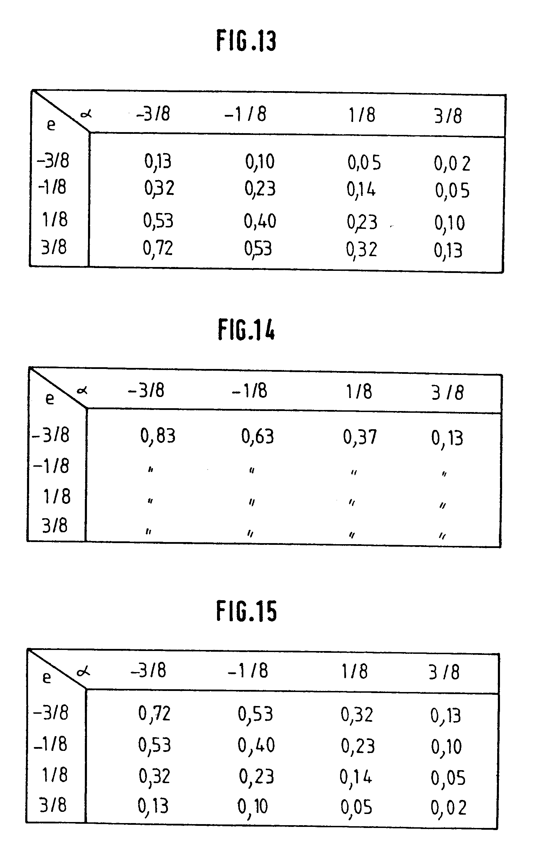

Ces valeurs de K sont obtenues au moyen d'un décodeur dont les tables de vérité sont représentées figures 13, 14 et 15.

On notera que, pour limiter le nombre de couleurs de lissage nécessaires, les coefficients ci-dessus sont approximés au coefficient K le plus proche nécessaire pour le lissage de la courbe, à savoir K = 0,15 ;

0,37 ; 0,63 ; 0,85.

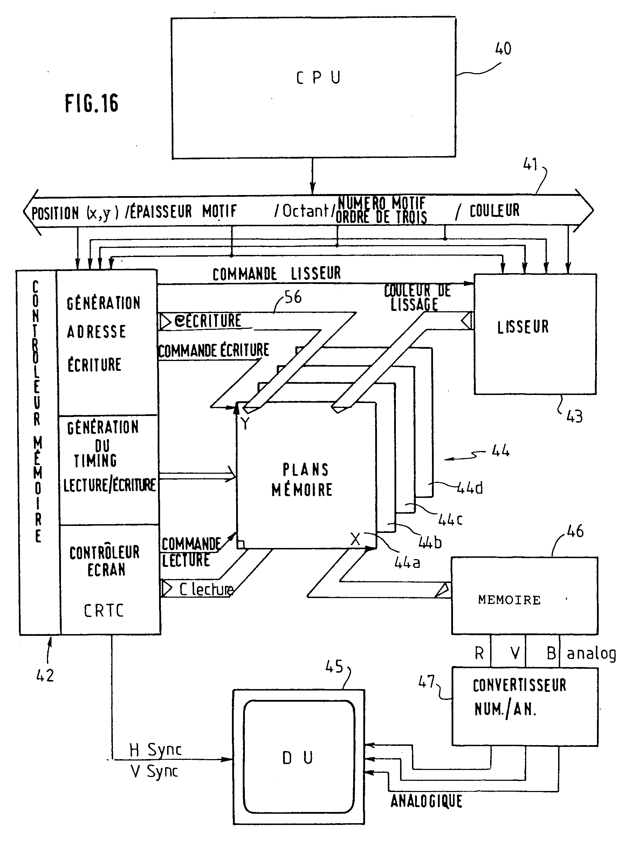

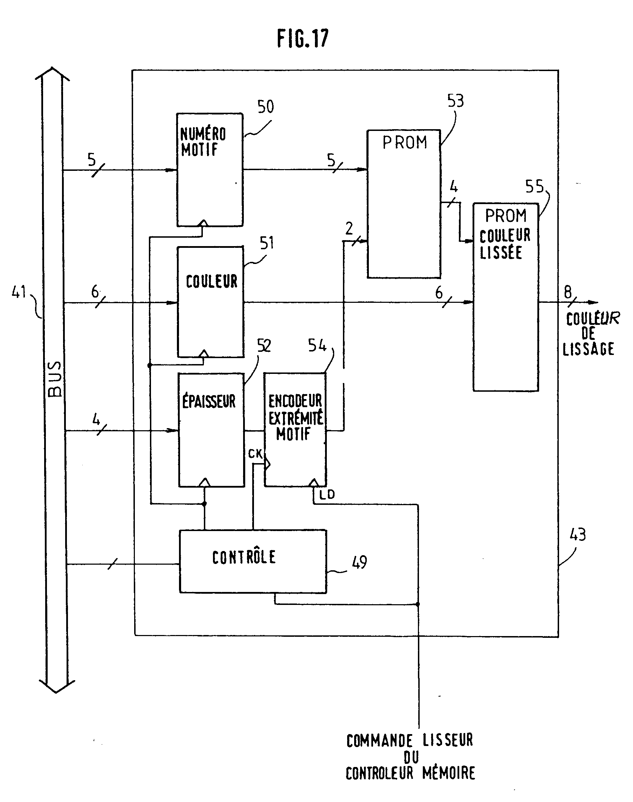

Le procédé précédemment décrit peut être réalisé au moyen d'un processeur dont l'architecture est représentée sur les figures 16 et 17.

Ce processeur comprend tout d'abord une unité centrale 40 permettant l'exécution d'un algorithme de lissage tel que ceux précédemment décrits, cette unité centrale 40 étant reliée, par l'intermédiaire d'une interface et d'un BUS 41 à deux sous-ensembles, à savoir à un contrôleur de mémoire 42 et à un lisseur 43.

Le contrôleur mémoire 42 est destiné à gérer tous les accès en écriture et en lecture à une mémoire vidéo 44, ainsi que les signaux de synchronisation pour le dispositif de visualisation, ici un tube de télévision à entrée analogique 45, et la commande de synchronisation pour le lancement du lisseur 43.

La mémoire vidéo 44 utilisée est divisée en plans mémoires $44_a$, $44_b$, $44_c$, $44_d$ permettant de définir chacun un bit de codage pour chacun des pixels de l'image.

Les informations fournies par la mémoire vidéo 44 sont transmises à une mémoire programmable 46 (PROM LOOK UP TABLE) qui effectue le transcodage de l'information logique provenant des plans mémoires $44_a$, $44_b$, $44_c$, $44_d$ en une information numérique de couleur RVB.

Ces informations numériques de couleur sont ensuite transmises à un convertisseur 47 transformant l'information numérique de couleur en information analogique séparée pour chaque canon RVB du tube de télévision 45.

Du fait du balayage de télévision, la lecture des plans mémoires $44_a$ à $44_d$ est périodique de fréquence dépendant de la fréquence de rafraîchissement de l'image.

Le contrôleur de mémoire 42 incrémente régulièrement les adresses à lire et transmet les signaux de synchronisation au tube de télévision 45, à savoir :
- les signaux de synchronisation horizontale H-synchro,
- les signaux de synchronisation verticale V-synchro.

Cette gestion des accès en lecture est organisée autour d'un composant CRTC par exemple le composant MC 6845 de la firme Motorola.

Le contrôleur de mémoire 42 gère également le séquencement lecture/écriture de la mémoire vidéo 44 en fonction de la fréquence de rafraîchissement de l'image. Il n'autorise l'écriture dans les plans mémoires qu'à certains moments uniquement.

Le contrôleur de mémoire 42 génère en outre l'adresse d'écriture dans les plans mémoires $44_a$ à $44_d$.

L'adresse d'écriture est composée à partir des informations X,Y du motif à tracer, de l'épaisseur et de l'octant.

La réception du numéro de motif déclenche la séquence d'écriture de tous les pixels du motif et active le lisseur 43. Les adresses successives de tous les pixels sont calculées pour être disponibles lors de cycles d'écriture mémoire consécutifs. Le lisseur présente à ces moments là la couleur à écrire en mémoire.

Tel que représenté sur la figure 17, le lisseur utilisé dans le processeur précédemment décrit comprend tout d'abord, raccordés au BUS 41 :
- un circuit logique de contrôle 49 permettant le chargement de registres et un séquencement (timing) identique au séquencement d'écriture en mémoire vidéo 44, et
- trois registres 50, 51, 52 destinés à mémoriser les informations utiles au lissage, à savoir :
  - les informations sur le numéro de couleur à tracer (registre 51),
  - les informations concernant le numéro des motifs (registre 50),
  - les informations sur l'épaisseur du tracé (registre 52).

Le lisseur comprend en outre une mémoire programmable PROM de lissage 53 raccordée par ses entrées au registre 50 destiné aux numéros des motifs et au registre 52 destiné aux informations sur l'épaisseur du tracé, par l'intermédiaire d'un encodeur d'extrémités 54 qui consiste en fait en un décompteur associé à une sortie indiquant le chargement, le décomptage quelconque, la fin du décomptage.

La mémoire programmable de lissage 53 contient la description de tous les motifs utilisés, et notamment les numéros de couleurs intermédiaires (1, 2, 3) et les numéros de couleur (4).

Cette mémoire programmée de lissage 53 est reliée par sa sortie à l'entrée d'une mémoire programmée 55, destinée à décrire, pour chaque numéro de couleur, les quatre couleurs de lissage à utiliser et à transmettre à la mémoire vidéo 44 les informations correspondantes. Cette mémoire programmée 55 se trouve également reliée par son entrée au registre 51 contenant les informations sur le numéro de couleur à tracer.

Le circuit logique de contrôle 49 pilote les trois registres 50, 51, 52 ainsi que l'encodeur d'extrémité 54. Il détecte la présence des informations intéressant le lisseur sur le BUS 41 et génère l'ordre de chargement dans le registre correspondant.

8

La commande du contrôleur de mémoire 42 déclenche la séquence de fonctionnement suivante de l'encodeur d'extrémité 54 :

- le chargement des informations d'épaisseur dans l'encodeur d'extrémité 54 et l'activation de la sortie de cet encodeur 54 pour signifier "pixel du haut" du motif ;
- la décrémentation du décompteur de l'encodeur d'extrémité 54 et l'activation de la sortie pour signifier "pixel du centre" du motif ;
- l'arrêt de la décrémentation de l'encodeur d'extrémité 54 et l'activation de la sortie pour signifier "pixel du bas" du motif.

Cette séquence est contrôlée de façon telle que le temps entre deux décomptages soit égal au temps entre deux écritures consécutives dans la mémoire vidéo 44. Ainsi, la sortie de l'information sur la couleur provenant du lisseur et la sortie de l'adresse du pixel sont synchrones.

Les informations concernant le numéro du motif fournies par le registre 50 et les informations fournies par l'encodeur d'extrémité 54 permettent de sélectionner dans la mémoire programmable de lissage 53 le type de couleur intermédiaire à écrire en mémoire 44, c'est-à-dire les couleurs intermédiaires 1, 2, 3 ou la couleur de tracé 4.

Cette information permet d'adresser, avec le numéro de la couleur, la mémoire programmable 44 (couleur lissée) et d'avoir ainsi le code de couleur de lissage à écrire réellement en mémoire vidéo 44.

La sortie du lisseur 43 est toujours active, le contrôle permettant simplement d'assurer que les bonnes informations de couleurs seront présentées sur le bus d'écriture de données 56, de la mémoire vidéo 44 quand les adresses et les commandes d'écriture seront envoyées par le contrôleur de mémoire 42.

## Revendications

1. Procédé pour le tracé, avec lissage, d'une courbe d'équation F(x,y) = 0, sur une surface de visualisation à réseau maillé, formant un système de coordonées, aux valeurs entières desquelles se trouvent des pixels d'affichage, par un processus incrémental en déterminant l'ensemble discret (xi, yi) des points suivant au mieux ladite courbe, à partir des éléments de contact des extrémités de la courbe,

   caractérisé en ce que l'ensemble discret (xi, yi) des points suivent au mieux ladite courbe dans un réseau maillé à nombre de lignes et de colonnes fini, dont le pas est reduit a une fraction du pas du réseau maillé de la surface de visualisation, et aussi caractérisé en ce qu'il comprend les étapes suivantes :

   - le calcul des dérivées partielles

$$FX = \frac{\partial F(x,y)}{\partial x}, \quad FY = \frac{\partial F(x,y)}{\partial y}, \quad FXX = \frac{\partial^2 F(x,y)}{\partial x^2}, \quad FYY = \frac{\partial^2 F(x,y)}{\partial y^2}, \quad FXY = \frac{\partial^2 F(x,y)}{\partial x \partial y},$$

   de l'équation au point marquant le début de la courbe de coordonnées $x = x_D$, $y = y_D$,
   - la détermination de l'octant, par rapport audit point, où se trouve la courbe, et du caractère horizontal ou vertical d'un motif à appliquer en fonction du signe des dérivées premières FX, FY et du signe de la différence entre les valeurs absolues de FX et de FY, un motif étant un groupe de pixels dans une configuration prédéfinie,
   - la détermination d'un changement d'octant,
   - un test fin de courbe,
   - la détermination d'un point nouveau dudit réseau maillé à par réduit, par une incrémentation, $\Delta x$, -$\Delta x$, $\Delta y$ ou -$\Delta y$ égale en valeur absolue au pas réduit, en fonction de l'octant et du signe de la fonction F(x,y),
   - la mise à jour de F(x,y) et des dérivées partielles au nouveau point obtenu sur le réseau maillé à pas réduit,
   - selon que le motif à appliquer est vertical ou horizontal, la détection du passage de x ou de y à une valeur entière et sinon la répétition du processus à partir de la susdite détection de changement d'octant,
   - dans le cas où on détecte le passage de y à une valeur entière, la détermination d'un motif en fonction de la valeur de e qui est sensiblement égale à la valeur de la partie fractionnaire de x, en fonction du signal de la $\overline{dérivée}$ $\frac{\delta F}{\delta y}$ et du signe de la valeur F, à l'aide d'une table de vérité, et l'allumage du motif au point (x ', y), x' étant déterminé par une table de vérité en fonction de la dérivée $\frac{\delta F}{\delta y}$ et du signe de F,

- dans le cas où on détecte le passage de x à une valeur entiere, la détermination d'un motif en fonction de la valeur e qui est alors sensiblement égale à la valeur fractionnaire de y , en fonction du signe de la dérivée $\frac{\delta F}{\delta x}$ et du signe de la valeur F, à l'aide d'une table de vérité, et l'allumage de ce motif au point (x, y'), y' étant déterminé par une table de vérité en fonction de la dérivée $\frac{\delta F}{\delta x}$ et du signe de F,

la détermination de la couleur d'un pixel d'un motif proche de la courbe étant obtenue en appliquant sur ce pixel un filtre de reconstruction et en calculant, par une convolution entre la courbe à tracer et le filtre, la contribution de la courbe sur ce pixel à travers le filtre, de manière à en déduire la couleur à attribuer au pixel pour générer l'effet produit par la courbe passant près de ce pixel.

**2.** Procédé selon la revendication 1,
caractérisé en ce que la couleur $C_p$ du pixel est déterminée par l'équation :

$$C_p = C_f + K(d,h) \, (C_t - C_f)$$

équation dans laquelle :
$C_f$ est la couleur de fond,
$C_t$ est la couleur de trait,
$K(d,h)$ est une variable dont la valeur pour une courbe d'épaisseur donnée est fonction du filtre de reconstruction, de la distance $\underline{d}$ du pixel à la courbe, et de l'épaisseur de la courbe.

**3.** Procédé selon la revendication 2,
caractérisé en ce que la variable $K(d,h)$ est déterminée par une table de vérité fournissant, pour chacun des pixels constituant un motif, la valeur de $K(d,h)$ en fonction de la valeur $\underline{e}$ servant à déterminer ce motif.

**4.** Dispositif pour la mise en oeuvre du procédé selon l'une des revendications précédentes,
caractérisé en ce qu'il comporte un dispositif de visualisation piloté par un processeur comprenant une unité centrale (40) relié par l'intermédiaire d'une interface et d'un BUS (41) au moins à un lisseur (43) et à un contrôleur de mémoire (42) destiné à gérer tous les accès en écriture et en lecture à une mémoire vidéo (44) ainsi que tous les signaux de synchronisation pour le dispositif de visualisation et pour la commande de synchronisation assurant le lancement du lisseur (43), ladite unité centrale comprenant:
- des moyen pour le calcul des dérivées partielles

$$FX = \frac{\partial F(x,y)}{\partial x}, \quad FY = \frac{\partial F(x,y)}{\partial y}, \quad FXX = \frac{\partial^2 F(x,y)}{\partial x^2}, \quad FYY = \frac{\partial^2 F(x,y)}{\partial y^2}, \quad FXY = \frac{\partial^2 F(x,y)}{\partial x \partial y}$$

de l'équation au point marquant le début de la courbe de coordonnées $x = x_D$ , $y = y_D$,
- des moyen pour la determination de l'octant, par rapport audit point, où se trouve la courbe, et du caractère horizontal ou vertical d'un motif à appliquer en fonction du signe des dérivées premières FX, FY et du signe de la différence entre les valeurs absolues de FX et de FY, un motif étant un groupe de pixels dans une configuration prédéfinie,
- des moyen pour la determination d'un changement d'octant,
- de moyen pour effectuer un test fin de courbe,
- des moyen pour la determination d'un point nouveau dudit réseau maillé à par réduit, par une incrémentation, Δx, -Δx, Δy ou -Δy égale en valeur absolue au pas réduit, en fonction de l'octant et du signe de la fonction F(x,y),
- des moyens pour la mise à jour de F(x,y) et des dérivées partielles au nouveau point obtenu sur le réseau maillé à pas réduit,
- selon que le motif à appliquer est vertical ou horizontal, des moyen pour la detection du passage de x ou de y à une valeur entiere et sinon la répétition du processus à partir de la susdite détection de changement d'octant,

- dans le cas où on détecte le passage de y à une valeur entiere, des moyen pour la détermination d'un motif en fonction de la valeur de e qui est sensiblement égale à la valeur de la partie fractionnaire de x, en fonction du signal de $\overline{\text{de}}$ la dérivée $\frac{\delta F}{\delta y}$ et du signe de la valeur F, à l'aide d'une table de vérité, et pour l'allumage du motif au point (x', y), x' étant déterminé par une table de vérité en fonction de la dérivée $\frac{\delta F}{\delta y}$ et du signe de F,

- dans le cas où on détecte le passage de x à une valeur entiere des moyen pour la determination d'un motif en fonction de, la valeur e qui est alors sensiblement égale à la valeur fractionnaire de y , en fonction du signe de la dérivée $\frac{\delta F}{\delta x}$ et du signe de la valeur F, à l'aide d'une table de vérité, et pour l'allumage de ce motif au point (x, y'), y' étant déterminé par une table de vérité en fonction de la dérivée $\frac{\delta F}{\delta x}$ et du signe de F,

des moyen pour la détermination de la couleur d'un pixel d'un motif proche de la courbe en appliquant sur ce pixel un filtre de reconstruction et en calculant, par une convolution entre la courbe à tracer et le filtre, la contribution de la courbe sur ce pixel à travers le filtre, de manière à en déduire la couleur à attribuer au pixel pour générer l'effet produit par la courbe passant près de ce pixel.

**5.** Dispositif selon la revendication 4,
caractérisé en ce que la mémoire vidéo (44) est divisée en plans mémoires permettant de définir chacun un bit de codage pour chacun des pixels de l'image, en ce que les informations fournies par la mémoire vidéo (44) sont transmises à une mémoire programmable (46) qui effectue le transcodage de l'information logique des plans mémoires ($44_a$, $44_b$, $44_c$, $44_d$) en une information numérique de couleur, et en ce que ces informations numériques de couleur sont ensuite transformées par un convertisseur (47) en des informations analogiques séparées pour chacune des couleurs, utilisables par le dispositif de visualisation.

**6.** Dispositif selon l'une des revendications 4 et 5,
caractérisé en ce que la lecture des plans de mémoire ($44_a$ à $44_d$) est périodique et s'effectue à une fréquence dépendant de la fréquence de rafraîchissement de l'image, et en ce que le contrôleur de mémoire (42) est conçu de manière à incrémenter régulièrement les adresses à lire et transmet les signaux de synchronisation horizontale et verticale du dispositif de visualisation.

**7.** Dispositif selon l'une des revendications 4 à 6,
caractérisé en ce que le contrôleur est conçu de manière à :
- gérer le séquencement lecture-écriture de la mémoire vidéo (44) en fonction de la fréquence de rafraîchissement de l'image ;
- n'autoriser l'écriture dans les plans mémoires qu'à certains moments uniquement, et
- générer en outre l'adresse d'écriture dans les plans mémoires ($44_a$ à $44_d$).

**8.** Dispositif selon l'une des revendications 4 à 7,
caractérisé en ce que le lisseur comprend :
- d'une part, raccordés au susdit bus :
  - un circuit logique de contrôle (49) permettant le chargement de registres et un séquencement identique au séquencement d'écriture en mémoire vidéo (44), ainsi que
  - des registres (50, 51, 52) destinés à mémoriser les informations utiles au lissage et, en particulier, un premier registre (50) prévu pour les informations sur le numéro de couleur à tracer, un deuxième registre (51) pour les informations concernant le numéro des motifs et un troisième registre (52) pour les informations sur l'épaisseur du tracé, et
- d'autre part :
  - une mémoire programmable de lissage (53) raccordée par ses entrées au premier registre (50) et au deuxième registre (51), par l'intermédiaire d'un encodeur d'extrémité (54) qui consiste en fait en un décompteur associé à une sortie indiquant le chargement, le décomptage et la fin du décomptage, cette mémoire programmable (53) contenant la description de tous les motifs utilisés et étant reliée par sa sortie à l'entrée d'une mémoire programmée (55) reliée par son entrée au deuxième registre (51) et apte à décrire, pour chaque numéro de couleur, les quatre couleurs de lissage à utiliser, et à transmettre à la mémoire vidéo (44) les informations correspondantes.

**9.** Dispositif selon l'une des revendications 4 à 8,
caractérisé en ce que le susdit circuit logique de contrôle (49) pilote les trois registres (50, 51, 52) ainsi que l'encodeur d'extrémité, détecte la présence des informations intéressant le lisseur sur le BUS (41) et génère l'ordre de chargement dans le registre correspondant.

**10.** Dispositif selon l'une des revendications 4 à 9 ,
caractérisé en ce que le contrôleur de mémoire (42) est apte à déclencher la séquence de fonctionnement suivante de l'encodeur d'extrémité (54) :
- le chargement des informations d'épaisseur dans l'encodeur d'extrémité (54) et l'activation de la sortie de cet encodeur (54) pour signifier "pixel du haut" du motif ;
- la décrémentation du décompteur de l'encodeur d'extrémité (54) et l'activation de la sortie pour signifier "pixel du centre" du motif ;
- l'arrêt de la décrémentation de l'encodeur d'extrémité (54) et l'activation de la sortie pour signifier "pixel du bas" du motif.

**11.** Dispositif selon la revendication 10,
caractérisé en ce que la susdite séquence est contrôlée de façon telle que le temps entre deux décomptages soit égal au temps entre deux écritures consécutives dans la mémoire vidéo (44).

## Claims

**1.** A process for tracing with smoothing of a curve of equation F(x,y) = 0 on a visualization surface with mesh network forming a system of coordinates at the whole values of which display pixels are located, by an incremental procedure by determining the discrete set (xi, yi) of the points best following said curve from the contact elements of the ends of the curve, characterized in that the discrete set (xi, yi) of the points best follows said curve in a meshed network with a finite number of lines and columns whose pitch is reduced to a fraction of the pitch of the meshed network of the visualization surface and also characterized in that it comprises the following operations :
- calculation of the partial derivatives

$$FX \ = \ \frac{\partial F(x,y)}{\partial x} \quad , \quad FY \ = \frac{\partial F(x,y)}{\partial y} \quad ,$$

$$FXX \ = \frac{\partial^2 F(x,y)}{\partial x^2} \quad , \quad FYY \ = \frac{\partial^2 F(x,y)}{\partial y^2}$$

$$FXY \ = \frac{\partial^2 F(x,y)}{\partial x \, \partial y}$$

of the function at the point marking the beginning of the curve with coordinates $x = x_D$, $y = y_D$,
- determination of the octant with respect to said point where the curve is located and of the horizontal or vertical character of a pattern to be applied depending on the sign of the first derivatives FX, FY and on the sign of the difference between the absolute values of FX and FY, a pattern being a group of pixels in a predetermined configuration,
- determination of an octant change,
- testing for the end of the curve,
- determination of a new point of said reduced pitch meshed network by an incrementation, $\Delta x$, $-\Delta x$, $\Delta y$, or $-\Delta y$ equal in absolute value to the reduced pitch depending on the octant and on the sign of the function F(x,y),
- updating of F(x,y) and of the partial derivatives at the new point obtained on the reduced pitch mesh network,
- depending on whether the pattern to be applied is vertical or horizontal, detection of the passage of x or y to a whole value and if not, repetition of the procedure from said detection of change of octant,
- in the case where the passage of y to a whole value is detected, determination of a pattern as a function of the value e which is substantially equal to the value of the fractional part of x as a function of the sign of the derivative δF/δy and the sign of value F by means of a table of truth and illumination of said pattern at point (x',y), x' being determined by a table of truth as a function of the derivative δF/δy and the sign of F,

- in the case where the passage of x to a whole value is detected, determination of a pattern as a function of the value e which is then substantially equal to the value of the fractional part of y, as a function of the sign of the derivative δF/δx and the sign of value F by means of a table of truth, and illumination of said pattern at point (x,y'), y' being determined by a table of truth as a function of the derivative δF/δx and the sign of F,

- determination of the color of a pixel of a pattern close to the curve being obtained by applying to said pixel a reconstruction filter and by calculating, by means of a convolution between the curve to be plotted and the filter the contribution of the curve to said pixel through the filter so as to deduce therefrom the color to be attributed to the pixel for generating the effect provided by the curve passing close to said pixel.

2.    The process as claimed in claim 1, characterized in that the color $C_p$ of the pixel is determined by the equation :

$$C_p = C_f + K(d,h) (C_t - C_f)$$

in which equation :

$C_f$ is the background color,

$C_t$ is the line color,

K(d,h) is a variable whose value for a curve of given thickness depends on the reconstruction filter, on the distance d of the pixel to the curve, and on the thickness of the curve.

3.    The process as claimed in claim 2, characterized in that the variable K(d,h) is determined by a table of truth providing, for each of the pixels forming a pattern, the value of K(d,h) as a function of the value e for determining this pattern.

4.    Device for implementing the process according to one of the preceding claims, characterized in that it comprises a visualization device driven by a processor comprising a central unit (40) connected through an interface and a BUS (41) at least to a smoother (43) and to a memory controller (42) intended for controlling all the writing and reading accesses to a video memory (44) as well as all the synchronization signals for the visualization device and for the synchronization control ensuring start-up of the smoother (43), said contral unit comprising :

- means for calculating the partial derivatives

$$FX = \frac{\partial F(x,y)}{\partial x} \quad , \quad FY = \frac{\partial F(x,y)}{\partial y} \quad ,$$

$$FXX = \frac{\partial^2 F(x,y)}{\partial x^2} \quad ,$$

$$FYY = \frac{\partial^2 F(x,y)}{\partial y^2} \quad , \quad FXY = \frac{\partial^2 F(x,y)}{\partial x \partial y}$$

of the function at the point marking the beginning of the curve with coordinates $x = x_D$, $y = y_D$,

- means for determining the octant with respect to said point where the curve is located and of the horizontal or vertical character of a pattern to be applied depending on the sign of the first derivatives FX, FY and on the sign of the difference between the absolute values of FX and FY, a pattern being a group of pixels in a predetermined configuration,

- means for determining an octant change,

- means for testing for the end of the curve,

- means for determining a new point of said reduced pitch meshed network by an incrementation, Δx, -Δx, Δy, or -Δy equal in absolute value to the reduced pitch depending on the octant and on the sign of the function F(x,y),

- means for the updating of F(x,y) and of the partial derivatives at the new point obtained on the reduced pitch mesh network,
- depending on whether the pattern to be applied is vertical or horizontal, means for detecting the passage of x or y to a whole value and if not, repetition of the procedure from said detection of change of octant,
- in the case where the passage of y to a whole value is detected, means for determining a pattern as a function of the value e which is substantially equal to the value of the fractional part of x as a function of the sign of the derivative $\delta F/\delta y$ and the sign of value F by means of a table of truth and for illuminating said pattern at point (x' ,y), x' being determined by a table of truth as a function of the derivative $\delta F/\delta y$ and the sign of F,
- in the case where the passage of x to a whole value is detected means for determining a pattern as a function of the value e which is then substantially equal to the value of the fractional part of y, as a function of the sign of the derivative $\delta F/\delta x$ and the sign of value F by means of a table of truth, and for illuminating said pattern at point (x,y'), y' being determined by a table of truth as a function of the derivative $\delta F/\delta x$ and the sign of F,
- means for determining the color of a pixel of a pattern close to the curve by applying to said pixel a reconstruction filter and by calculating, by means of a convolution between the curve to be plotted and the filter the contribution of the curve to said pixel through the filter so as to deduce therefrom the color to be attributed to the pixel for generating the effect provided by the curve passing close to said pixel.

5. Device according to claim 4, characterized in that the video memory (44) is divided into memory planes each defining a coding bit for each of the pixels of the image, in that the information supplied by the video memory (44) is transmitted to a programmable memory (46) which transcodes the logic information from the memory planes ($44_a$, $44_b$, $44_c$, $44_d$) into digital color information and in that this digital color information is then transformed by a converter (47) into separate analog information for each of the colors, usable by the visualization device.

6. Device according to one of claims 4 and 5, characterized in that reading of the memory planes ($44_a$ to $44_d$) is periodic and takes place at a frequency depending on the refreshing frequency of the image and in that the memory controller (42) is designed so as to increment regularly the addresses to be read and transmits the horizontal and vertical synchronization signals of the visualization device.

7. Device according to one of claims 4 to 6, characterized in that the controller is designed so as to :
   control the reading-writing sequencing of the video memory (44) as a function of the refreshing frequency of the image ;
   - allow writing in the memory planes only at certain times, and
   - generate in addition the writing address in the memory planes ($44_a$ to $44_d$).

8. Device according to one of claims 4 to 7, characterized in that the smoother comprises :
   - on the one hand, connected to said bus :
     . a control logic circuit (49) for allowing register loading and sequencing identical to the writing sequencing in the video memory (44), as well as
     . registers (50, 51, 52) for storing the information useful for smoothing and, in particular, a first register (50) provided for the information relating to the color number to be plotted, a second register (51) for the information concerning the number of the patterns, and a third register (52) for the information relating to the thickness of the plotted line, and
   - on the other hand :
     . a programmable smoothing memory (53) connected by its inputs to the first register (50) and to the second register (51) through an end encoder (54) which in fact consists of a down-counter associated with an output indicating loading, down-counting and the end of down-counting, this programmable memory (53) containing the description of all the patterns used and being connected by its output to the input of a programmed memory (55) connected by its input to the second register (51) and adapted for describing, for each color number, the four smoothing colors to be used, and transmitting the corresponding information to the video memory (44).

**9.** Device according to one of claims 4 to 8, characterized in that said logic control circuit (49) drives the three registers (50, 51, 52) and the end encoder, detects the presence of information concerning the smoother on BUS (41) and generates the order for loading into the corresponding register.

**10.** Device according to one of claims 4 to 9, characterized in that the memory controller (42) is adapted for triggering off the next operating sequence of the end encoder (54) :
  - loading of the thickness information into the end encoder (54) and activation of the output of this encoder (54) for signifying "top pixel" of the pattern ;
  - decrementation of the down-counter of the end encoder (54) and activation of the output for signifying "center pixel" of the pattern ;
  - stopping of the decrementation of the end encoder (54) and activation of the output for signifying "bottom pixel" of the pattern.

**11.** Device according to claim 10, characterized in that said sequence is controlled so that the time between two down-counts is equal to the time between two consecutive writing operations in the video memory (44).

**Patentansprüche**

**1.** Verfahren für den Linienzug, mit Glättung, einer Gleichungskurve F(x,y) = 0, auf einer Anzeigeoberfläche mit Maschennetz, das ein System von Koordinaten bildet, an deren ganzahligen Werten sich Anzeigepixel befinden, durch einen Inkrementierprozeß, indem die diskrete Einheit (xi, yi) der Punkte unter bestmöglichem Folgen der Kurve ausgehend von den Kontaktelementen der Enden der Kurve bestimmt wird, dadurch gekennzeichnet, daß die diskrete Einheit (xi, yi) der Punkte so gut wie möglich der Kurve in einem Maschennetz mit einer endlichen Anzahl von Zeilen und Spalten folgt, dessen Rasterschritt reduziert ist auf einen Bruchteil des Rasterschritts des Maschennetzes der Anzeigeoberfläche, und auch dadurch gekennzeichnet, daß es die folgenden Verfahrensschritte aufweist:
  - die Berechnung der partiellen Ableitungen $FX = \delta F(x,y)/\delta x$, $FY = \delta F(x,y)/\delta y$, $FXX = \delta^2 F(x,y)/\delta x^2$, $FYY = \delta^2 F(x,y)/\delta y^2$, $FXY = \delta^2 F(x,y)/\delta X \delta y$ der Gleichung in dem Punkt, der den Beginn der Koordinatenkurve $x = x_D$, $y = y_D$ markiert,
  - die Bestimmung des Oktanten, im Verhältnis zu diesem Punkt, wo sich die Kurve befindet, und des waagrechten oder senkrechten Charakters eines in Abhängigkeit vom Vorzeichen der ersten Ableitungen FX, FY und vom Vorzeichen der Differenz zwischen den Absolutwerten von FX und FY anzubringenden Motivs, wobei ein Motiv eine Gruppe von Pixeln in einer vorbestimmten Konfiguration ist,
  - die Bestimmung einer Oktantenveränderung,
  - ein Kurvenende-Test,
  - die Bestimmung eines neuen Punkts des Maschennetzes mit reduziertem Rasterschritt durch eine Inkrementierung, $\Delta x$, $-\Delta x$, $\Delta y$ oder $-\Delta y$, die im Absolutwert gleich dem reduzierten Rasterschritt ist, in Abhängkeit vom Oktanten und vom Vorzeichen der Funktion F(x,y),
  - die Aktualisierung von F(x,y) und den partiellen Ableitungen am neuen auf dem Maschennetz mit reduziertem Rasterschritt erhaltenen Punkt,
  - je nachdem, ob das anzubringende Motiv senkrecht oder waagrecht ist, die Erfassung des Übergangs von x oder y auf einem ganzzahligen Wert und sonst die Wiederholung des Prozesses ausgehend von der Erfassung der Oktantenveränderung,
  - in dem Fall, wo der Übergang von y auf einen ganzzahligen Wert erfaßt wird, die Bestimmung eines Motivs in Abhängigkeit vom Wert von e, der im wesentlichen gleich dem Wert des Bruchteils von x ist, in Abhängigkeit vom Vorzeichen der Ableitung $\delta F/\delta y$ und vom Vorzeichen des Werts F, mit Hilfe einer Wahrheitstafel, und die Zündung des Motivs im Punkt (x', y), wobei x' durch eine Wahrheitstafel in Abhängigkeit von der Ableitung $\delta F/\delta y$ und vom Vorzeichen von F bestimmt wird,
  - in dem Fall, wo der Übergang von x auf einen ganzzahligen Wert erfaßt wird, die Bestimmung eines Motivs in Abhängkeit von dem Wert e, der dann im wesentlichen gleich dem Bruchteilwert von y ist, in Abhängigkeit vom Vorzeichen der Ableitung $\delta F/\delta x$ und vom Vorzeichen des Werts F, mit Hilfe einer Wahrheitstafel, und die Zündung dieses Motivs im Punkt (x, y'), wobei y' durch eine Wahrheitstafel in Abhängigkeit von der Ableitung $\delta F/\delta x$ und dem Vorzeichen von F bestimmt wird, wobei die Bestimmung der Farbe eines Pixels eines Motivs nahe der Kurve erhalten wird, indem auf diesen Pixel ein Wiederherstellungsfilter angewendet wird und indem durch eine

15

Konvolution zwischen der zu zeichnenden Kurve und dem Filter der Beitrag der Kurve auf diesem Pixel durch das Filter berechnet wird, um daraus die dem Pixel zuzuordnende Farbe abzuleiten, um die durch die nahe diesem Pixel verlaufende Kurve erzeugte Wirkung zu generieren.

2. Verfahren nach Anspruch 1, dadurch gekennzeichnet, daß die Farbe $C_p$ des Pixels bestimmt wird durch die Gleichung:

$$C_p = C_f + K(d,h) (C_t - C_f)$$

Gleichung, in der:
$C_f$ die Hintergrundfarbe ist,
$C_t$ die Linienfarbe ist,
$K(d,h)$ eine Variable ist, deren Wert für eine Kurve einer gegebenen Stärke abhängt von dem Wiederherstellungsfilter, von dem Abstand $\underline{d}$ des Pixels zur Kurve und der Stärke der Kurve.

3. Verfahren nach Anspruch 2, dadurch gekennzeichnet, daß die Variable $K(d,h)$ bestimmt wird durch eine Wahrheitstafel, die für jeden der ein Motiv bildenden Pixel den Wert von $K(d,h)$ in Abhängigkeit vom Wert $\underline{e}$ liefert, der zur Bestimmung dieses Motivs dient.

4. Vorrichtung zur Anwendung des Verfahrens nach einem der vorhergehenden Ansprüche, dadurch gekennzeichnet, daß sie eine Anzeigevorrichtung aufweist, die von einem Prozessor gesteuert wird, der eine zentrale Einheit (40) aufweist, die über ein Interface und einen BUS (41) mindestens mit einem Glätter (43) und einem Speicher-Steuerschalter (42) verbunden ist, der alle Schreib- und Lesezugänge zu einem Videospeicher (44) sowie alle Synchronisationssignale für die Anzeigevorrichtung und für die Steuerung der Synchronisation steuert, die das Anwerfen des Glätters (43) bewirkt, wobei die zentrale Einheit aufweist:
- Mittel zur Berechnung der partiellen Ableitungen $FX = \delta F(x,y)/\delta x$, $FY = \delta F(x,y)/\delta y$, $FXX = \delta^2 F(x,y)/\delta x^2$, $FYY = \delta^2 F(x,y)/\delta y^2$, $FXY = \delta^2 F(x,y)/\delta x \delta y$ der Gleichung in dem Punkt, der den Beginn der Koordinatenkurve $x = x_D$, $y = y_D$ markiert,
- Mittel zur Bestimmung des Oktanten, im Verhältnis zu diesem Punkt, wo sich die Kurve befindet, und des waagrechten oder senkrechten Charakters eines in Abhängigkeit vom Vorzeichen der ersten Ableitungen FX, FY und vom Vorzeichen der Differenz zwischen den Absolutwerten von FX und FY anzubringenden Motivs, wobei ein Motiv eine Gruppe von Pixeln in einer vorbestimmten Konfiguration ist,
- Mittel zur Bestimmung einer Oktantenveränderung,
- Mittel zur Durchführung eines Kurvenende-Tests,
- Mittel zur Bestimmung eines neuen Punkts des Maschennetzes mit reduziertem Rasterschritt durch eine Inkrementierung, $\Delta x$, $-\Delta x$, $\Delta y$ oder $-\Delta y$, die im Absolutwert gleich dem reduzierten Rasterschritt ist, in Abhängkeit vom Oktanten und vom Vorzeichen der Funktion $F(x,y)$,
- Mittel zur Aktualisierung von $F(x,y)$ und der partiellen Ableitungen am neuen auf dem Maschennetz mit reduziertem Rasterschritt erhaltenen Punkt,
- je nachdem, ob das anzubringende Motiv senkrecht oder waagrecht ist, Mittel zur Erfassung des Übergangs von x oder y auf einem ganzzahligen Wert und sonst die Wiederholung des Prozesses ausgehend von der Erfassung der Oktantenveränderung,
- in dem Fall, wo der Übergang von y auf einen ganzzahligen Wert erfaßt wird, Mittel zur Bestimmung eines Motivs in Abhängigkeit vom Wert von e, der im wesentlichen gleich dem Wert des Bruchteils von x ist, in Abhängigkeit vom Vorzeichen der Ableitung $\delta F/\delta y$ und vom Vorzeichen des Werts F, mit Hilfe einer Wahrheitstafel, und zur Zündung des Motivs im Punkt (x', y), wobei x' durch eine Wahrheitstafel in Abhängigkeit von der Ableitung $\delta F/\delta y$ und vom Vorzeichen von F bestimmt wird,
- in dem Fall, wo der Übergang von x auf einen ganzen Wert erfaßt wird, Mittel zur Bestimmung eines Motivs in Abhängkeit von dem Wert e, der dann im wesentlichen gleich dem Bruchteilwert von y ist, in Abhängigkeit vom Vorzeichen der Ableitung $\delta F/\delta x$ und vom Vorzeichen des Werts F, mit Hilfe einer Wahrheitstafel, und zur Zündung dieses Motivs im Punkt (x, y'), wobei y' durch eine Wahrheitstafel in Abhängigkeit von der Ableitung $\delta F/\delta x$ und dem Vorzeichen von F bestimmt wird, Mittel zur Bestimmung der Farbe eines Pixels eines Motivs nahe der Kurve, indem auf diesen Pixel ein Wiederherstellungsfilter angewendet wird und indem durch eine Konvolution zwischen der zu zeichnenden Kurve und dem Filter der Beitrag der Kurve auf diesen Pixel durch das Filter berechnet wird, um daraus die dem Pixel zuzuordnende Farbe abzuleiten, um die durch die nahe diesem Pixel verlaufende Kurve erzeugte Wirkung zu generieren.

**5.** Vorrichtung nach Anspruch 4, dadurch gekennzeichnet, daß der Videospeicher (44) in Speicherebenen aufgeteilt ist, die es erlauben, jede ein Kodierbit für jeden der Pixel des Bilds zu definieren, daß die vom Videospeicher (44) gelieferten Informationen an einen programmierbaren Speicher (46) übertragen werden, der die Transkodierung der logischen Information der Speicherebenen ($44_a$, $44_b$, $44_c$, $44_d$) in eine digitale Farbinformation durchführt, und daß diese digitalen Farbinformationen dann von einem Wandler (47) in analoge, für jede der Farben getrennte Informationen umgewandelt werden, die von der Anzeigevorrichtung genutzt werden können.

**6.** Vorrichtung nach einem der Ansprüche 4 und 5, dadurch gekennzeichnet, daß das Lesen der Speicherebenen ($44_a$ bis $44_d$) periodisch ist und bei einer Frequenz stattfindet, die von der Auffrischfrequenz des Bildes abhängt, und daß der Speicher-Steuerschalter (42) so gestaltet ist, daß er regelmäßig die zu lesenden Adressen inkrementiert und die waagrechten und senkrechten Synchronisationssignale der Anzeigevorrichtung überträgt.

**7.** Vorrichtung nach einem der Ansprüche 4 bis 6, dadurch gekennzeichnet, daß daß der Steuerschalter so gestaltet ist, daß er
- die Folgeschaltung Lesen-Schreiben des Videospeichers (44) in Abhängigkeit von der Auffrischfrequenz des Bilds steuert,
- das Schreiben in den Speicherebenen nur zu bestimmten Zeitpunkten erlaubt,
- außerdem die Schreibadresse in den Speicherebenen ($44_a$ bis $44_d$ ) generiert.

**8.** Vorrichtung nach einem der Ansprüche 4 bis 7, dadurch gekennzeichnet, daß der Glätter aufweist:
- einerseits, angeschlossen an den Bus:
  - einen logischen Steuerkreis (49), der das Laden von Registern und eine Folgeschaltung identisch der Schreib-Folgeschaltung im Videospeicher (44) erlaubt, sowie
  - Register (50, 51, 52) zum Speichern der für die Glättung nützlichen Informationen und insbesondere ein erstes Register (50), das für die Informationen über die Nummer der zu zeichnenden Farbe vorgesehen ist, ein zweites Register (51) für die Informationen betreffend die Nummer der Motive und ein drittes Register (52) für die Informationen über die Stärke des Linienzugs, und
- andererseits
  - einen programmierbaren Glättungsspeicher (53), der mit seinen Eingängen an das erste Register (50) und an das zweite Register (51) über einen Endkodierer (54) angeschlossen ist, der aus einem Rückwärtszähler besteht, der einem Ausgang zugeordnet ist, der die Ladung, das Rückwärtszählen und das Ende des Rückwärtszählens angibt, wobei dieser programmierbare Speicher (53) die Beschreibung aller verwendeten Motive enthält und über seinen Ausgang mit einem Eingang eines programmierten Speichers (55) verbunden ist, der über seinen Eingang mit dem zweiten Register (51) verbunden ist und für jede Farbnummer die vier zu verwendenden Glättungsfarben beschreiben und die entsprechenden Informationen zum Videospeicher (44) übertragen kann.

**9.** Vorrichtung nach einem der Ansprüche 4 bis 8, dadurch gekennzeichnet, daß der logische Steuerkreis (49) die drei Register (50, 51, 52) und den Endkodierer steuert, auf dem BUS (41) das Vorhandensein von Informationen erfaßt, die den Glätter betreffen, und die Ladungsreihenfolge in das entsprechende Register generiert.

**10.** Vorrichtung nach einem der Ansprüche 4 bis 9, dadurch gekennzeichnet, daß der Speicher-Steuerschalter (42) die folgende Betriebssequenz des Endkodierers (54) auslösen kann:
- das Laden der Linienstärke-Informationen in den Endkodierer (54) und die Aktivierung des Ausgangs dieses Kodierers (54), um "oberes Pixel" des Motivs anzugeben;
- die Dekrementierung des Rückwärtszählers des Endkodierers (54) und die Aktivierung des Ausgangs, um "zentrales Pixel" des Motivs anzugeben;
- das Anhalten der Dekrementierung des Endkodierers (54) und die Aktivierung des Ausgangs, um "unteres Pixel" des Motivs anzugeben.

**11.** Vorrichtung nach Anspruch 10, dadurch gekennzeichnet, daß diese Sequenz derart gesteuert wird, daß die Zeit zwischen zwei Rückwärtszählvorgängen gleich der Zeit zwischen zwei aufeinanderfolgenden Einschreibvorgängen in den Videospeicher (44) ist.

FIG.1

EP 0 151 544 B1

# FIG.2

FIG.3

## FIG.4

| SIGNE $(|F_Y|-|F_X|)$ | SIGNE $(F_X)$ | SIGNE $(F_Y)$ | $f_1$ | $f_2$ |
|:---:|:---:|:---:|:---:|:---:|
| + | + | + | 4 | 1 |
| + | + | − | 1 | 1 |
| + | − | + | 5 | 1 |
| + | − | − | 8 | 1 |
| − | − | + | 6 | 0 |
| − | − | − | 7 | 0 |
| − | + | + | 3 | 0 |
| − | + | − | 2 | 0 |

## FIG.5

$$N = f_3 ( \text{Octant, SIGNE } F)$$

| Octant | 1 | 2 | 3 | 4 | 5 | 6 | 7 | 8 |
|:---|:---:|:---:|:---:|:---:|:---:|:---:|:---:|:---:|
| $F > 0$ | 2 | 2 | 1 | 1 | 3 | 3 | 0 | 0 |
| $F < 0$ | 0 | 0 | 2 | 2 | 1 | 1 | 3 | 3 |

## FIG.6

| N° MOTIF | 0 | 1 | 2 | 3 |
|:---|:---:|:---:|:---:|:---:|
| DESCRIPTION DE LA POSITION DE LA COURBE | | | | |

**FIG.7**

MOTIF = $f_5(Y, F, F_Y)$

| PARTIE FRACTIONNAIRE DE Y | | 0 | 0,25 | 0,5 | 0,75 |
|---|---|---|---|---|---|
| $F_Y \geqslant 0$ | $F \geqslant 0$ | 1 | 2 | 3 | 0 |
| | $F < 0$ | 2 | 3 | 0 | 1 |
| $F_Y < 0$ | $F \geqslant 0$ | 2 | 3 | 0 | 1 |
| | $F < 0$ | 1 | 2 | 3 | 0 |

MOTIF = $f_4(X, F, F_X)$

| PARTIE FRACTIONNAIRE DE X | | 0 | 0,25 | 0,5 | 0,75 |
|---|---|---|---|---|---|
| $F_X \geqslant 0$ | $F \geqslant 0$ | 1 | 2 | 3 | 0 |
| | $F < 0$ | 2 | 3 | 0 | 1 |
| $F_X < 0$ | $F \geqslant 0$ | 2 | 3 | 0 | 1 |
| | $F < 0$ | 1 | 2 | 3 | 0 |

**FIG.8**

$Y' = f_5'(Y, F, F_Y)$

| PARTIE FRACTIONNAIRE DE Y | | 0 | 0,25 | 0,5 | 0,75 |
|---|---|---|---|---|---|
| $F_Y \geqslant 0$ | $F \geqslant 0$ | $E(Y)$ | $E(Y)$ | $E(Y)$ | $E(Y+1)$ |
| | $F < 0$ | $E(Y)$ | $E(Y)$ | $E(Y+1)$ | $E(Y+1)$ |
| $F_Y < 0$ | $F \geqslant 0$ | $E(Y)$ | $E(Y)$ | $E(Y+1)$ | $E(Y+1)$ |
| | $F < 0$ | $E(Y)$ | $E(Y)$ | $E(Y)$ | $E(Y+1)$ |

$X' = f_4'(X, F, F_X)$

| PARTIE FRACTIONNAIRE DE X | | 0 | 0,25 | 0,5 | 0,75 |
|---|---|---|---|---|---|
| $F_X \geqslant 0$ | $F \geqslant 0$ | $E(X)$ | $E(X)$ | $E(X)$ | $E(X+1)$ |
| | $F < 0$ | $E(X)$ | $E(X)$ | $E(X+1)$ | $E(X+1)$ |
| $F_X < 0$ | $F \geqslant 0$ | $E(X)$ | $E(X)$ | $E(X+1)$ | $E(X+1)$ |
| | $F < 0$ | $E(X)$ | $E(X)$ | $E(X)$ | $E(X+1)$ |

23

## FIG.9

## FIG.10

FILTRE H

FORME DU FILTRE

## FIG.11

|  | e=-3/8 | e=-1/8 | e=1/8 | e=3/8 |
|---|---|---|---|---|
| $K_1$ | 0,15 | 0,37 | 0,63 | 0,85 |
| $K_2$ | 0,96 | 0,99 | 0,99 | 0,96 |
| $K_3$ | 0,85 | 0,63 | 0,37 | 0,15 |

## FIG.12

$$C_p = C_f + K (C_t - C_g)$$

## FIG.13

| e \ α | -3/8 | -1/8 | 1/8 | 3/8 |
|---|---|---|---|---|
| -3/8 | 0,13 | 0,10 | 0,05 | 0,02 |
| -1/8 | 0,32 | 0,23 | 0,14 | 0,05 |
| 1/8 | 0,53 | 0,40 | 0,23 | 0,10 |
| 3/8 | 0,72 | 0,53 | 0,32 | 0,13 |

## FIG.14

| e \ α | -3/8 | -1/8 | 1/8 | 3/8 |
|---|---|---|---|---|
| -3/8 | 0,83 | 0,63 | 0,37 | 0,13 |
| -1/8 | " | " | " | " |
| 1/8 | " | " | " | " |
| 3/8 | " | " | " | " |

## FIG.15

| e \ α | -3/8 | -1/8 | 1/8 | 3/8 |
|---|---|---|---|---|
| -3/8 | 0,72 | 0,53 | 0,32 | 0,13 |
| -1/8 | 0,53 | 0,40 | 0,23 | 0,10 |
| 1/8 | 0,32 | 0,23 | 0,14 | 0,05 |
| 3/8 | 0,13 | 0,10 | 0,05 | 0,02 |

## FIG.16

# FIG.17